# EUROPÄISCHE PATENTSCHRIFT

(11) **EP 3 448 932 B1**
(45) Veröffentlichungstag und Bekanntmachung des Hinweises auf die Patenterteilung: **09.09.2020**
(21) Anmeldenummer: 17718383.7
(22) Anmeldetag: 25.04.2017
(51) Int. Cl.: C08L 67/03, C08L 69/00, C08L 55/02, C08K 3/22

(54) **ANTISTATISCHE THERMOPLASTISCHE FORMMASSEN**
ANTISTATIC THERMOPLASTIC MOULDING MATERIALS
MASSES DE FORMAGE THERMOPLASTIQUES ANTISTATIQUES

(30) Priorität: 27.04.2016 EP 16167315
(43) Veröffentlichungstag der Anmeldung: 06.03.2019
(73) Patentinhaber: Covestro Deutschland AG, 51373 Leverkusen (DE)
(72) Erfinder: SEIDEL, Andreas, 41542 Dormagen (DE)
(74) Vertreter: Levpat
(86) Internationale Anmeldenummer: PCT/EP2017/059706
(87) Internationale Veröffentlichungsnummer: WO 2017/186663

(56) Entgegenhaltungen:
- WO-A1-2012/084848
- DE-A1- 3 544 295

## Beschreibung

Die vorliegende Erfindung betrifft dauerhaft antistatisch ausgerüstete thermoplastische Formmassen und deren Zusammensetzungen enthaltend mindestens ein Polymer ausgewählt aus der Gruppe bestehend aus aromatischem Polycarbonat, aromatischem Polyestercarbonat und aromatischem Polyester, die Verwendung der Formmassen zur Herstellung von Formkörpern und die Formkörper selbst.

Ein weiterer Gegenstand der Erfindung ist die Verwendung von Pigmenten auf Basis von Titandioxid zur Verbesserung der Zähigkeit und der elektrischen Oberflächenleitfähigkeit von mit Polyether-basierten Polymeren ausgerüsteten Zusammensetzungen enthaltend mindestens ein Polymer ausgewählt aus der Gruppe bestehend aus aromatischem Polycarbonat, aromatischem Polyestercarbonat und aromatischem Polyester.

Bei Kunststoffformkörpern ist die auf elektrostatische Aufladung zurückgehende Anlagerung von Staub unter Ausbildung von Staubfiguren ein weit verbreitetes Problem. Besonders störend und die Funktion einschränkend sind Staubablagerungen bei hochglänzenden Formkörpern.

Oft werden die zuvor genannten Probleme durch Aufbringung einer antistatischen Beschichtung (beispielsweise durch Lackierung) gelöst. Als Beispiele relevanter Anwendungsbereiche seien Gehäuseanwendungen in der Informationstechnologie sowie dekorative Automobilinnenraumbauteile genannt. Insbesondere im zuletzt genannten Anwendungsbereich ist im Allgemeinen eine hohe Materialduktilität auch bei tiefen Temperaturen eine weitere Bauteilanforderung.

Wenn auf einen nachgeschalteten Beschichtungsprozess verzichtet werden soll, müssen naturgemäß die Formmassen nicht nur die gewünschten mechanischen Eigenschaften, sondern darüber hinaus inhärent auch die geforderten Oberflächeneigenschaften (hohe elektrische Ableitfähigkeit bzw. geringer spezifischer elektrischer Oberflächenwiderstand) aufweisen. Die angestrebte Kombination aus Duktilität auch bei tiefen Temperaturen und hoher elektrischer Ableitfähigkeit wird aber von thermoplastischen Zusammensetzungen des Standes der Technik oft nicht ausreichend realisiert.

In den genannten Anwendungsbereichen kommen wegen ihrer vorteilhaften Eigenschaftskombination aus guter Verarbeitbarkeit (hohe Schmelzefließfähigkeit), ausgezeichnete mechanische Eigenschaften, hohe Wärmeformbeständigkeit und Flammwidrigkeit oft Polycarbonat-Zusammensetzungen zum Einsatz. Zudem sind grundsätzlich zwar permanent antistatisch ausgerüstete Polycarbonat-Zusammensetzungen bekannt, der Zusatz der hierfür erforderlichen Additive beeinflusst jedoch in der Regel nachteilig die angestrebten Eigenschaften.

Insofern ist es auch eine unzureichend gelöste technische Herausforderung, Polycarbonat-Zusammensetzungen bereitzustellen, die gleichzeitig ausreichend permanent antistatisch und tieftemperaturzäh sind.

In der Literatur sind für Thermoplasten Antistatika beschrieben (siehe z.B. Gächter, Müller, Plastic Additives, Hanser Verlag, München, 1996, S. 749 ff), welche die Staubanlagerung reduzieren. Diese Antistatika reduzieren den elektrischen Oberflächenwiderstand der Kunststoffformmassen, wodurch Oberflächenladungen, welche sich bei der Herstellung und beim Gebrauch durch Reibung ausbilden, besser abgeleitet werden. Somit werden Staubpartikel weniger elektrostatisch angezogen.

Polyetheramide, Polyesteramide oder Polyetheresteramide sind häufig beschriebene Antistatika, wobei diese Verbindungen Polymerzusammensetzungen mit einer dauerhaften Antistatikwirkung auszustatten vermögen. Ihre Wirkung beruht auf der Ausbildung eines dreidimensionalen Netzwerkes des Antistatikums in dem mit dem Antistatikum nicht mischbaren Polymer, welches antistatisch ausgerüstet werden soll. Aufgrund der vergleichsweise hohen elektrischen Leitfähigkeit der Polyetheramide, Polyesteramide und Polyetheresteramide resultiert somit eine sofortige und dauerhafte Reduzierung des elektrischen Oberflächen- und Volumenwiderstandes des antistatisch auszurüstenden Polymers, welche bereits bei sehr geringen Luftfeuchtigkeiten einsetzt und von dieser weit weniger abhängt, als das bei den ebenfalls in der Literatur genannten oberflächenaktiven Verbindungen wie Salzen langkettiger Sulfonsäuren der Fall ist.

Permanent antistatisch ausgerüstete Polycarbonat-Zusammensetzungen werden beispielsweise in der US 6,784,257 B2 offenbart. In dieser Anmeldung werden antistatische Polymerzusammensetzungen beschrieben enthaltend ein thermoplastisches Polymer und ein Polyether-Polyamid-Blockcopolymer mit einem Schmelzpunkt zwischen 80 und 150°C, wobei die Polyetherblöcke Ethylenoxid-Einheiten enthalten.

US 6,706,851 B1 offenbart antistatische Polymerzusammensetzungen enthaltend ein thermoplastisches Polymer und ein Polyetheresteramid-Blockcopolymer, wobei die Polyetherblöcke im Wesentlichen aus Ethylenoxid-Einheiten bestehen.

US 6,913,804 B2 offenbart antistatische Polymerzusammensetzungen enthaltend ein thermoplastisches Polymer und eine Mischung aus einem Co-Polymer enthaltend Polyamid- und Polyether-Blöcke, welches keine ionisch-funktionellen Gruppen enthält und einem Co-Polymer enthaltend Polyamid- und Polyether-Blöcke, welches ionisch-funktionellen Gruppen enthält.

Alle drei zuvor genannten Patente offenbaren auch Zusammensetzungen, in denen das thermoplastische Polymer Polycarbonat, ABS oder eine Mischung daraus ist.

CN 101967274 A offenbart permanent antistatische Polycarbonat/Acrylnitril-Butadien-Styrol (PC/ABS)-Zusammensetzungen mit exzellenten mechanischen Eigenschaften und Witterungsstabilität enthaltend Polycarbonat, ein ABS-Harz, antistatische Agenzien, Verträglichkeitsvermittler, Antioxidanzien, Lichtstabilisatoren und andere Additive. Als antistatische Agenzien werden Polyetherester, Polyetheresteramide und Polyetheramide offenbart.

CN 101759974 A offenbart antistatische Polycarbonat-Zusammensetzungen mit geringem Geruch und hoher Zähigkeit für Automobilinnenraumanwendungen enthaltend Polycarbonat, ABS-Harz, welches im Masse-Polymerisations-Verfahren hergestellt wurde und einen Schmelzeindex von 4 bis 25 g/10 min aufweist, ein polymeres antistatisches Agenz, einen Verträglichkeitsvermittler und optional weitere Additive ausgewählt aus beispielsweise der Gruppe enthaltend Farbmittel, Füllstoffe, Stabilisatoren und Gleitmittel. Als antistatische Agenzien werden Polyetheramide offenbart.

JP 3663701 B2 offenbart antistatische Polycarbonat-Zusammensetzungen enthaltend Polycarbonat, kautschukmodifizierten Thermoplast enthaltend Vinylpolymer und Pfropfpolymer erhaltend durch Pfropfung von Vinylmonomeren auf kautschukartige Polymere sowie Polyetheramide.

DE 3544295 A1 offenbart Formmassen enthaltend halogenierte Copolycarbonate, Pfropfpolymerisate auf Basis eines Acrylatkautschuks, thermoplastische Copolymerisate, Tetrafluorethylenpolymerisate, Metallverbindungen aus Antimon oder Bismut, Titandioxid sowie gegebenenfalls niedermolekulare, organische Halogenverbindungen, Stabilisatoren, Fließmittel, Antistatika und/oder Entformungsmittel. Die Formmassen zeichnen sich durch eine Kombination von guter Flammwidrigkeit, Kriechstromfestigkeit, thermischer Belastbarkeit und Verarbeitbarkeit aus.

WO 2012/084848 A1 offenbart antistatische Polycarbonat-Formmassen mit verbesserter Wärmeformbeständigkeit, Tieftemperaturzähigkeit, Verarbeitungsstabilität, Spannungsrißbeständigkeit und Hydrolysebeständigkeit enthaltend Polycarbonat, kautschukmodifiziertes Vinyl(co)polymerisat, eine Verbindung ausgewählt aus der Gruppe bestehend aus Polyetheramiden, Polyesteramiden und Polyetheresteramiden, eine spezielle Brönstedt-Säure und optional weitere Additive.

Es war wünschenswert, permanent antistatische Zusammensetzungen enthaltend mindestens ein Polymer ausgewählt aus der Gruppe bestehend aus aromatischem Polycarbonat, aromatischem Polyestercarbonat und aromatischem Polyester mit einer verbesserten Kombination aus möglichst geringem spezifischen elektrischen Oberflächenwiderstand (ausreichend hoher elektrischer Ableitfähigkeit) und Tieftemperaturduktilität bereitzustellen. Die Zusammensetzungen sollten darüber hinaus eine hohe Wärmeformbeständigkeit aufweisen. Somit sollten die Zusammensetzungen die Anforderungen der Automobilindustrie für unlackierte dekorative Bauteile im Automobilinnenraum erfüllen. Eine solche Zusammensetzung, wie sie mit der vorliegenden Erfindung offenbart wird, ist im Stand der Technik bislang nicht beschrieben worden.

Es wurde nun gefunden, dass Zusammensetzungen enthaltend
A) 50 bis 90 Gew.-%, bevorzugt 60 bis 80 Gew.-%, besonders bevorzugt 65 bis 75 Gew.-% mindestens eines Polymers ausgewählt aus der Gruppe bestehend aus aromatischem Polycarbonat, aromatischem Polyestercarbonat und aromatischen Polyester, bevorzugt aromatisches Polycarbonat,
B) 5 bis 40 Gew.-%, bevorzugt 10 bis 30 Gew.-%, besonders bevorzugt 15 bis 25 Gew.-% kautschukbasiertes Pfropfpolymerisat oder einer Mischung aus kautschukbasiertem Pfropfpolymerisat und kautschukfreiem Vinyl(co)polymerisat,
C) 3 bis 25 Gew.-%, bevorzugt 5 bis 15 Gew.-%, besonders bevorzugt 6 bis 12 Gew.-% mindestens eines Polyether-basierten Copolymers ausgewählt aus der Gruppe bestehend aus Polyether-Block-Polymeren und Polyether-basierten Polyurethanen,
D) 0,8 bis 9 Gew.-%, bevorzugt 2 bis 8 Gew.-%, besonders bevorzugt 3 bis 7 Gew.-% mindestens eines Pigments auf Basis von Titandioxid,
E) 0 bis 20 Gew.-%, bevorzugt 0,1 bis 15 Gew.-%, weiter bevorzugt 0,2 bis 10 Gew.-% eines oder mehrerer weiterer Additive,
die vorteilhaften Eigenschaften aufweisen.

In einer bevorzugten Ausführungsform werden Komponenten C und D in einem Verhältnis von C/D, jeweils in Gew.-%, von 0,7 bis 15, bevorzugt von 1 bis 6, besonders bevorzugt von 1,1 bis 4, am meisten bevorzugt 1,2 bis 2,5 eingesetzt.

Eine weitere Ausführungsform der vorliegenden Erfindung ist die Verwendung von Pigmenten auf Basis von Titandioxid zur Verbesserung der Zähigkeit und der Oberflächenleitfähigkeit von mit Polyether-Block-Polymeren ausgerüsteten Zusammensetzungen enthaltend mindestens ein Polymer ausgewählt aus der Gruppe bestehend aus aromatischem Polycarbonat, aromatischem Polyestercarbonat und aromatischem Polyester.

Im Folgenden werden folgende besondere Ausführungsformen 1 bis 31 der vorliegenden Erfindung aufgeführt.
1. Zusammensetzungen enthaltend
   A) 50 bis 90 Gew.-% mindestens eines Vertreters ausgewählt aus der Gruppe bestehend aus aromatischem Polycarbonat, aromatischem Polyestercarbonat und aromatischem Polyester,
   B) 5 bis 40 Gew.-% kautschukbasiertes Pfropfpolymerisat oder einer Mischung aus kautschukbasiertem Pfropfpolymerisat und kautschukfreiem Vinyl(co)polymerisat,
   C) 3 bis 25 Gew.-% mindestens eines Polyether-basierten Copolymers ausgewählt aus der Gruppe bestehend aus Polyether-Block-Polymeren und Polyether-basierten Polyurethanen,
   D) 0,8 bis 9 Gew.-% mindestens eines Pigments auf Basis von Titandioxid,
   E) 0 bis 20 Gew.-% eines oder mehrerer weiterer Additive.
2. Zusammensetzungen gemäß Ausführungsform 1, wobei Komponente A aromatisches Polycarbonat enthält.
3. Zusammensetzungen gemäß Ausführungsform 1, wobei Komponente A aromatisches Polycarbonat ist.
4. Zusammensetzungen gemäß einer der vorherigen Ausführungsformen, wobei die in Komponente B zum Einsatz kommenden Pfropfpolymerisate
   B.1 5 bis 95 Gew.-%, bezogen auf das Pfropfpolymerisat, wenigstens eines Vinylmonomeren auf
   B.2 95 bis 5 Gew.-%, bezogen auf das Pfropfpolymerisat, einer oder mehrerer kautschukelastischer Pfropfgrundlagen mit Glasübergangstemperaturen < -50°C umfassen.
5. Zusammensetzungen gemäß Ausführungsform 4, wobei die Pfropfgrundlage B.2 reiner Polybutadienkautschuk ist.
6. Zusammensetzungen gemäß Ausführungsform 4, wobei die Pfropfgrundlage B.2 Styrol-Butadien-Blockcopolymer-Kautschuk ist.
7. Zusammensetzungen gemäß einer der vorherigen Ausführungsformen, wobei die Komponente B nicht an die Kautschukgrundlage chemisch gebundenes und nicht in den Kautschukpartikeln eingeschlossenes Vinyl(co)polymerisat bestehend aus den Monomeren gemäß B.1 in einem Anteil von mindestens 5 Gew.-%, bezogen auf die Komponente B, enthält.
8. Zusammensetzungen gemäß einer der vorherigen Ausführungsformen, wobei die Komponente B nicht an die Kautschukgrundlage chemisch gebundenes und nicht in den Kautschukpartikeln eingeschlossenes Vinyl(co)polymerisat bestehend aus den Monomeren gemäß B.1. in einem Anteil von mindestens 50 Gew.-%, bezogen auf die Komponente B, enthält.
9. Zusammensetzungen gemäß einer der vorherigen Ausführungsformen, wobei die Komponenten C und D in einem Gewichtsverhältnis C/D von 1,1 bis 4 eingesetzt werden.
10. Zusammensetzungen gemäß einer der vorherigen Ausführungsformen, wobei die Komponenten C und D in einem Gewichtsverhältnis C/D von 1,2 bis 2,5 eingesetzt werden.
11. Zusammensetzungen gemäß einer der vorherigen Ausführungsformen, wobei Komponente C ein Blockcopolymer enhaltend Polyethylenglykol- und Polyamid-Blöcke ist.
12. Zusammensetzungen gemäß einer der vorherigen Ausführungsformen, wobei Komponente C ein Blockcopolymer aus Polyethylenglykol- und Polyamid 12-Blöcken ist.
13. Zusammensetzungen gemäß einer der vorherigen Ausführungsformen, wobei Komponente C einen spezifischen elektrischen Oberflächenwiderstand von ≤10¹³ Ω aufweist.
14. Zusammensetzungen gemäß einer der vorherigen Ausführungsformen, wobei Komponente C einen spezifischen elektrischen Oberflächenwiderstand von ≤10¹¹ Ω aufweist.
15. Zusammensetzungen gemäß einer der vorherigen Ausführungsformen, wobei die Komponente D zu mindestens 95 Gew.-% aus Titandioxid in der Rutil-Modifikation besteht.
16. Zusammensetzungen gemäß einer der vorherigen Ausführungsformen, wobei die Komponente D in einem Anteil von 0,8 bis 8 Gew.-% eingesetzt wird
17. Zusammensetzungen gemäß einer der vorherigen Ausführungsformen, wobei die Komponente D in einem Anteil von 2 bis 8 Gew.-% eingesetzt wird.
18. Zusammensetzungen gemäß einer der vorherigen Ausführungsformen, wobei die Komponente D in einem Anteil von 3 bis 7 Gew.-% eingesetzt wird.
19. Zusammensetzungen gemäß einer der Ausführungsformen 1 bis 16, wobei die Komponente D in einem Anteil von 0,8 bis 7 Gew.-% eingesetzt wird.
20. Zusammensetzungen gemäß einer der Ausführungsformen 1 bis 16, wobei die Komponente D in einem Anteil von 0,8 bis 5 Gew.-% eingesetzt wird.
21. Zusammensetzungen gemäß einer der Ausführungsformen 1 bis 16, wobei die Komponente D in einem Anteil von 0,8 bis 3 Gew.-% eingesetzt wird.
22. Zusammensetzungen gemäß einer der Ausführungsformen 1 bis 16, wobei die Komponente D in einem Anteil von 1,5 bis 5 Gew.-% eingesetzt wird.
23. Zusammensetzungen gemäß einer der Ausführungsformen 1 bis 16, wobei die Komponente D in einem Anteil von 1,5 bis 3 Gew.-% eingesetzt wird.
24. Zusammensetzung gemäß einer der vorherigen Ausführungsformen, enthaltend als Komponente E mindestens ein Additiv ausgewählt aus der Gruppe bestehend aus Gleit- und Entformungsmitteln, Stabilisatoren, Fließfähigkeitspromotoren, Verträglichkeitsvermittlern sowie von Komponente D verschiedenen Farbstoffen und Pigmenten.
25. Zusammensetzungen gemäß einer der vorherigen Ausführungsformen, wobei als Komponente E weiterhin ein Salz, das die Leitfähigkeit der Komponente verstärkt, eingesetzt wird.
26. Zusammensetzungen gemäß einer der vorherigen Ausführungsformen, wobei als Komponente E weiterhin Kaliumbis(oxalato)borat oder Natriumbis(oxalato)borat eingesetzt wird.
27. Zusammensetzungen gemäß einer der vorherigen Ausführungsformen bestehend aus den Komponenten A) bis E).
28. Verwendung von Zusammensetzungen gemäß einer der Ausführungsformen 1 bis 27 zur Herstellung von Formkörpern.
29. Formkörper hergestellt aus Zusammensetzungen gemäß einer der Ausführungsformen 1 bis 27.
30. Verwendung von Pigmenten auf Basis von Titandioxid zur Verbesserung der Zähigkeit und der elektrischen Oberflächenleitfähigkeit von mit Polyether-basierten Polymeren ausgerüsteten Zusammensetzungen enthaltend mindestens ein Polymer ausgewählt aus der Gruppe bestehend aus aromatischem Polycarbonat, aromatischem Polyestercarbonat und aromatischem Polyester.
31. Verwendung gemäß Ausführungsform 30, wobei Zusammensetzungen gemäß einer der Ausführungsformen 1 bis 27 zum Einsatz kommen.

### Komponente A

Als Komponente A kann ein aromatisches Polycarbonat, ein aromatisches Polyestercarbonat, ein aromatischer Polyester oder eine Mischung aus mehreren Vertretern einer oder mehrerer dieser Substanzklassen gemäß der Beschreibung zuvor zum Einsatz kommen.

Bevorzugt enthält Komponente A aromatisches Polycarbonat.

Besonders bevorzugt wird als Komponente A ein oder mehrere aromatische Polycarbonate eingesetzt.

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 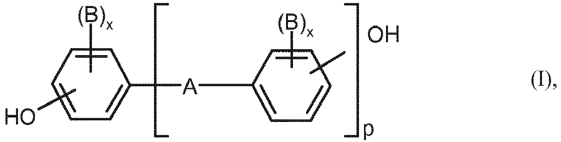 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 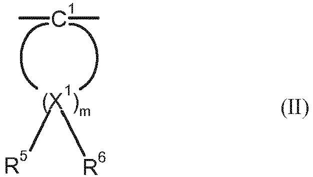 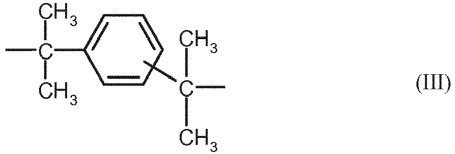
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

In einer bevorzugten Ausführungsform weisen die als Komponente A geeigneten aromatischen Polycarbonate oder Polyestercarbonate ein gewichtsgemitteltes Molekulargewicht M_{w} (ermittelt durch Gelpermeationschromatographie (GPC) in Methylenchlorid mit Polycarbonat als Standard) von 15000 g/mol bis 50000 g/mol, bevorzugt von 22000 g/mol bis 35000 g/mol, insbesondere von 24000 bis 32000 g/mol auf.

In Frage kommende aromatische Polyester sind in bevorzugter Ausführungsform Polyalkylenterephthalate. Es handelt sich hierbei in besonders bevorzugter Ausführungsform um Reaktionsprodukte aus aromatischen Dicarbonsäuren oder ihren reaktionsfähigen Derivate, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3 -tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die aromatischen Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind aromatische Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen von aromatischen Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten aromatischen Polyalkylenterephthalate besitzen eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente B

Bei der Komponente B handelt es sich um kautschukbasierte Pfropfpolymerisate oder um Mischungen aus kautschukbasierten Pfropfpolymerisaten mit kautschukfreien Vinyl(Co)Polymerisaten.

Die erfindungsgemäß in Komponente B zum Einsatz kommenden Pfropfpolymerisate umfassen
B.1 5 bis 95 Gew.-%, vorzugsweise 20 bis 92 Gew.-%, insbesondere 30 bis 91 Gew.-%, bezogen auf das Pfropfpolymerisat, wenigstens eines Vinylmonomeren auf
B.2 95 bis 5 Gew.-%, vorzugsweise 80 bis 8 Gew.-%, insbesondere 70 bis 9 Gew.-%, bezogen auf das Pfropfpolymerisat, einer oder mehrerer kautschukelastischer Pfropfgrundlagen mit Glasübergangstemperaturen < -50°C, weiter bevorzugt von < -60°C, besonders bevorzugt < -70°C.

Die Glasübergangstemperatur wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die Pfropfgrundlage B.2 hat im Allgemeinen eine mittlere Teilchengröße (D50-Wert) von 0,05 bis 10,00 µm, vorzugsweise von 0,1 bis 5,0 µm und besonders bevorzugt von 0,2 bis 1,5 µm.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-1796) bestimmt.

Die Monomere B.1 sind vorzugsweise Gemische aus

| | |
|---|---|
| B.1.1 | 65 bis 85 Gew.-%, besonders bevorzugt 70 bis 80 Gew.-%, weiter bevorzugt 74 bis 78 Gew.-%, jeweils bezogen auf die Summe aus B.1.1 und B.1.2, Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat), und |
| B.1.2 | 15 bis 35 Gew.-%, besonders bevorzugt 20 bis 30 Gew.-%, weiter bevorzugt 22 bis 26 Gew.-%, jeweils bezogen auf die Summe aus B.1.1 und B.1.2, Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid. |

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril. Alternativ bevorzugte Monomere sind B.1.1 Methylmethacrylat und B.1.2 Methylmethacrylat.

Als Pfropfgrundlage B.2 der Pfropfpolymerisate eignen sich beispielsweise Dienkautschuke, EP(D)M-Kautschuke, also solche auf Basis Ethylen/Propylen und gegebenenfalls Dien, Acrylat-, Polyurethan-, Silikon-, Chloropren, Ethylen/Vinylacetat- sowie Acrylat-Silikon-Komposit-Kautschuke.

Bevorzugte Pfropfgrundlagen B.1.2 sind Dienkautschuke, bevorzugt enthaltend Butadien oder Copolymerisate aus Dienen, bevorzugt enthaltend Butadien, und weiteren copolymerisierbaren Vinyl-Monomeren (z.B. gemäß B.1.1 und B.1.2) oder Gemische aus einer oder mehrerer der zuvor genannten Komponenten.

Besonders bevorzugt ist als Pfropfgrundlage B.2 reiner Polybutadienkautschuk. In einer weiteren bevorzugten Ausführungsform handelt es sich bei B.2 um Styrol-Butadien-Kautschuk, besonders bevorzugt um Styrol-Butadien-Blockcopolymer-Kautschuk.

Der Gelanteil der Pfropfgrundlage B.2 beträgt mindestens 30 Gew. %, vorzugsweise mindestens 40 Gew.-%, insbesondere mindestens 60 Gew.-%, jeweils bezogen auf B.2 und gemessen als unlöslicher Anteil in Toluol.

Der Gelgehalt der Pfropfgrundlage B.2 bzw. der Pfropfpolymere in Komponente B wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Geeignete Polymerisate gemäß Komponente B sind beispielsweise ABS- oder MBS-Polymerisate, wie sie z.B. in der DE-OS 2 035 390 (=US PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate in Komponente B werden durch radikalische Polymerisation, z.B. durch Emulsions-, Suspensions-, Lösungs- oder Massepolymerisation hergestellt. Als Komponente B können auch Mischungen von in unterschiedlichen Verfahren hergestellten Pfropfpolymerisaten verwendet werden.

Wenn die Pfropfpolymerisate B in Emulsions-Polymerisation hergestellt werden, so umfassen diese
B.1 5 bis 75 Gew.-%, bevorzugt 20 bis 60 Gew.-%, besonders bevorzugt 25 bis 50 Gew.-%, bezogen auf das Pfropfpolymerisat, wenigstens eines Vinylmonomeren auf
B.2 95 bis 25 Gew.-%, bevorzugt 80 bis 40 Gew.-%, besonders bevorzugt 75 bis 50 Gew.-%, bezogen auf das Pfropfpolymerisat, einer oder mehrerer kautschukelastischer Pfropfgrundlagen mit Glasübergangstemperaturen < -50°C, weiter bevorzugt von < -60°C, besonders bevorzugt < -70°C.

Die Pfropfgrundlage B.2 von in Emulsions-Polymerisation hergestellten Pfropfpolymerisaten B haben eine mittlere Teilchengröße (D50-Wert) von 0,05 bis 2,00 µm, bevorzugt von 0,1 bis 1,0 µm, besonders bevorzugt von 0,2 bis 0,5 µm.

In Emulsions-Polymerisation hergestellte Pfropfpolymerisate B weisen einen Gelgehalt, gemessen in Aceton als Lösungsmittel, von bevorzugt mindestens 30 Gew.-%, besonders bevorzugt von mindestens 60 Gew.-%, weiter bevorzugt von mindestens 80 Gew.-% auf.

Wenn die Pfropfpolymerisate B in Suspensions-, Lösungs- oder Massepolymerisation hergestellt werden, so umfassen diese
B.1 80 bis 95 Gew.-%, bevorzugt 84 bis 92 Gew.-%, besonders bevorzugt 87 bis 91 Gew.-%, bezogen auf das Pfropfpolymerisat, wenigstens eines Vinylmonomeren auf
B.2 20 bis 5 Gew.-%, bevorzugt 16 bis 8 Gew.-%, besonders bevorzugt 13 bis 9 Gew.-%, bezogen auf das Pfropfpolymerisat, einer oder mehrerer kautschukelastischer Pfropfgrundlagen mit Glasübergangstemperaturen < -50°C, weiter bevorzugt von < -60°C, besonders bevorzugt < -70°C.

Die Pfropfgrundlage B.2 von in Suspensions-, Lösungs- oder Massepolymerisation hergestellten Pfropfpolymerisaten B haben eine mittlere Teilchengröße (D50-Wert) von 0,3 bis 10,00 µm, bevorzugt von 0,4 bis 5,0 µm, besonders bevorzugt von 0,5 bis 1,5 µm.
In Suspensions-, Lösungs- oder Massepolymerisation hergestellte Pfropfpolymerisate B weisen einen Gelgehalt, gemessen in Aceton als Lösungsmittel, von bevorzugt 10 bis 50 Gew.-%, besonders bevorzugt von 15 bis 40 Gew.-%, weiter bevorzugt von 18 bis 30 Gew.-% auf.

Besonders geeignete im Emulsions-Polymerisationsverfahren hergestellte Pfropfpolymerisate sind beispielsweise ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Weitere besonders geeignete im Emulsions-Polymerisationsverfahren hergestellte Pfropfpolymerisate sind MBS-Modifikatoren mit Kern-Schale-Struktur.

Die Komponente B enthält freies, d.h. nicht an die Kautschukgrundlage chemisch gebundenes und nicht in den Kautschukpartikeln eingeschlossenes Vinyl(co)polymerisat bestehend aus den Monomeren gemäß B.1. Dieses kann in der Komponente B herstellungsbedingt bei der Polymerisation der Pfropfpolymerisate entstehen oder aber separat polymerisiert und der Komponente B zugemischt werden. Ebenso ist es möglich, dass ein Teil des freien Vinyl(co)polymerisats in Komponente B herstellungsbedingt aus den Pfropfpolymeren selbst stammt und ein anderer Teil separat polymerisiert und der Komponente B zugesetzt wurde. Der Anteil des freien Vinyl(co)polymeriats (unabhängig von dessen Ursprung), gemessen als in Aceton löslicher Anteil, in der Komponente B beträgt, bezogen auf die Komponente B, bevorzugt mindestens 5 Gew.-%, besonders bevorzugt mindestens 30 Gew-%, weiter bevorzugt mindestens 50 Gew.-%.

Dieses freie Vinyl(co)polymerisat weist in den kautschukmodifizierten Vinyl(co)polymerisaten gemäß Komponente B ein gewichtgemitteltes Molekulargewicht M_{w} 30 bis 250 kg/mol, bevorzugt von 70 bis 200 kg/mol, insbesondere von 90 bis 180 kg/mol auf.

Das gewichtsgemittelte Molekulargewicht Mw des freien Vinyl(co)polymerisats in Komponente B wird im Rahmen der vorliegenden Erfindung per Gelpermeationschromatographie (GPC) in Tetrahydrofuran gegen Polystyrol als Standard gemessen.

### Komponente C

Bei der Komponente C handelt es sich um ein Polyether-basiertes Polymer oder Copolymer ausgewählt aus der Gruppe bestehend aus Polyether-Block-Polymeren und Polyether-basierten Polyurethanen.

Bevorzugt handelt es sich bei der Komponente C um ein Polyether-Block-Polymer.

Beispiele für die Polyether-Block-Polymere schließen Block-Copolymere enthaltend Polyether-Blöcke und Polymerblöcke ausgewählt aus mindestens einem Vertreter der Gruppe bestehend aus Polyamiden, Polyolefinen, Polyestern und Polyacrylaten ein. Bevorzugt sind Polyether-Block-Amide (PEBA), Polyester-Block-Amide und Polyetherester-Block-Amide sowie Mischungen aus diesen Polymeren. Besonders bevorzugt sind Polyether-Block-Amide (PEBA).

Bevorzugt enthalten diese Block-Copolymere 10 bis 90 Gew-%, besonders bevorzugt 20 bis 80 Gew.-%, weiter bevorzugt 30 bis 70 Gew.-%, bezogen auf das Block-Copolymer, an Polyetherblöcken.

Der Polyetherblockanteil im Block-Copolymer besteht bevorzugt zu mindestens 50 Gew.-%, besonders bevorzugt zu mindestens 80 Gew.-%, weiter bevorzugt zu mindestens 90 Gew.-% aus Ethylenglykoleinheiten. In der am meisten bevorzugten Ausführungsform handelt es sich bei den Polyetherblöcken um Polyethylenglykol.

Bei den in Komponente C zum Einsatz kommenden Polyether-Block-Amiden handelt es sich bevorzugt um solche Polyether-Block-Amide (PEBA), welche aus thermoplastischen Hartsegmenten aus Polyamidsequenzen und elastomeren Weichsegmenten aus Polyethersequenzen bestehen, welche entweder über Ester- oder Amidgruppen miteinander verknüpft sind. Zu solchen Polyether-Block-Amiden gelangt man durch Verknüpfung endständig funktionalisierter, bevorzugt endständig carboxylatfunktionalisierter Oligoamide mit difunktionellen Oligoethern, bevorzugt mit Oligoethern mit Hydroxyl- oder Aminoendgruppen. Als Polyamid kommt in den Polyether-Block-Amiden (PEBA) bevorzugt Polyamid 12 zum Einsatz.

Die Polyether-Block-Amide (PEBA) bestehen besonders bevorzugt aus Polyethylenglykol- und Polyamid 12-Blöcken.

In einer bevorzugten Ausführungsform enthält die Komponente C als Polyether-basiertes Polymer ein Polyether-Block-Polymer bestehend zu 10 bis 90 Gew-%, besonders bevorzugt 20 bis 80 Gew.-%, weiter bevorzugt 30 bis 70 Gew.-%, bezogen auf das Block-Copolymer, aus Polyethylenglykolblöcken und zu 10 bis 90 Gew-%, besonders bevorzugt 20 bis 80 Gew.-%, weiter bevorzugt 30 bis 70 Gew.-%, bezogen auf das Block-Copolymer, aus Polyamid-12.

Die in Komponente C zum Einsatz kommenden Polyether-Block-Polymere sind literaturbekannt und z.B. in US 4871804 (Daicel), EP 730005 (General Electric), EP 613919 (Sanyo Kasai), EP 1046675 (Arkema), EP 1155065 (Arkema) EP 1262527 (Arkema) sowie JP 09137053 (Asahi) offenbart.

Komponente C weist einen spezifischen elektrischen Oberflächenwiderstand, gemessen nach IEC 60093 (in der Version von 1993), von bevorzugt ≤10¹³ Ω, besonders bevorzugt von ≤ 10¹² Ω, weiter bevorzugt von ≤ 10¹¹ Ω auf.

Als Komponente C geeignet ist beispielsweise Pebax™ MV1074 SP01 (Arkema, Frankreich).

### Komponente D

Als Komponente D werden ein oder mehrere Pigmente auf Basis von Titandioxid eingesetzt.

Es handelt sich um natürlich vorkommende, synthetisch hergestellte oder modifizierte natürlich vorkommende Pigmente oder Mischungen daraus. Die Pigmente weisen bevorzugt eine der Kristallstrukturmodifikation von Rutil, Anatas oder Brookit auf. Die bevorzugte Modifikation ist Rutil.

Erfindungsgemäße Pigmente auf Basis von Titandioxid haben ein Dichte (gemäß DIN EN ISO 787-10) von 3,6 bis 4,4 g/cm³, bevorzugt von 3,8 bis 4,3 g/cm³, besonders bevorzugt von 4,0 bis 4,2 g/cm³.

Die Pigmente können in bekannter Weise nach dem Sulfat-Verfahren oder dem Chlorid-Verfahren aus natürlichen Rohstoffen wie Ilmenit, Rutil-Erz oder TiO₂-Schlacke gewonnen werden.

Die Pigmente können eine anorganische und/oder organische Oberflächenmodifizierung aufweisen, bevorzugt auf Basis von Aluminium- und/oder Polysiloxan-Verbindungen. Der Anteil an Titandioxid (gemäß DIN EN ISO 591) ist bevorzugt > 90 Gew.-%, besonders bevorzugt > 92 Gew.-%, weiter bevorzugt > 95 Gew.-%.

In bevorzugter Ausführungsform weisen die Pigmente eine Ölabsorption (gemäß IS0787-5) von 5 bis 50 g / 100 g Pigment, weiter bevorzugt von 10 bis 25 g / 100 g Pigment und besonders bevorzugt von 12 bis 18 g / 100 g Pigment auf.

### Komponente E

Die Zusammensetzung kann als Komponente E ein oder mehrere weitere Additive enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, weiteren von Komponente C verschiedenen Antistatika bzw. Leitfähigkeitsadditiven, die Leitfähigkeit der Komponente C verstärkende Verbindungen (wie Salze, Säuren oder Ionomere), Stabilisatoren (z.B. Hydrolyse-, Wärmealterungs- und Umesterungsstabilisatoren, UV-Stabilisatoren und Säure-/Basenquenchem), Fließfähigkeitspromotoren, Verträglichkeitsvermittlern (z. B. Polymethylmethacrylat), Schlagzähigkeitsmodifikatoren ohne Kern-Schale-Struktur, antibakteriell wirkenden Additiven (beispielsweise Silber oder Silbersalze), kratzfestigkeitsverbessernden Additiven (beispielsweise Silikonöle), IR-Absorbentien, optischen Aufhellern, fluoreszierenden Additiven, weiteren von den Komponenten A bis C verschiedenen polymeren Bestandteile (beispielsweise funktionelle Blendpartner), von Komponente D verschiedenen Farbstoffen und Pigmenten sowie Füll- und Verstärkungsstoffen (beispielsweise Karbonfasern, Talk, Glimmer, Kaolin, CaCO₃).

Als Salz, das die Leitfähigkeit der Komponente C verstärkt, kommt bevorzugt ein Borhaltiges Salz zum Einsatz.

Bei dem Bor-haltigen Salz handelt es sich bevorzugt um mindestens ein Alkalisalz eines borzentrierten anionischen Komplexes enthaltend zweizähnige Liganden ausgewählt aus der Gruppe bestehend aus C2-C8-aliphatischen oder aromatischen Komponenten mit mindestens zwei reaktiven Gruppen ausgewählt aus -COOH und -OH.

In besonders bevorzugter Ausführungsform handelt es sich bei dem Bor-haltigen Salz um ein Alkalisalz des Bis(oxalato)borat-Anions, besonders bevorzugt um Kaliumbis(oxalato)borat oder Natriumbis(oxalato)borat.

Das Salz kommt bevorzugt in einem Anteil von 0,2 bis 10 Gew.-%, weiter bevorzugt von 0,4 bis 4,0 Gew.-%, am stärksten bevorzugt von 1,0 bis 3,0 Gew.-%, jeweils bezogen auf die Komponente C, zum Einsatz.

In einer weiteren Ausführungsform wird die Komponente C mit dem Salz und/oder einer oder mehrerer weiterer, bevorzugt polymerer, Komponenten vorgemischt, optional zu einem Präcompound verarbeitet und als solche Mischung oder Präcompound zur Herstellung der erfindungsgemäßen Formmassen eingesetzt.

Ein weiterer Gegenstand der Erfindung ist daher ein Verfahren zur Herstellung von thermoplastischen Formmassen, bei dem in einem ersten Schritt ein Polyether-Block-Polymer und Polyether-basiertes Polyurethan mit einem Salz, bevorzugt ein Bor-Salz, besonders bevorzugt Kaliumbis(oxalato)borat oder Natriumbis(oxalato)borat, und/oder einer oder mehrerer weiterer, bevorzugt polymerer, Komponenten vorgemischt und optional zu einem Präcompound verarbeitet wird. In einem zweiten Schritt des erfindungsgemäßen Verfahrens wird dann die Mischung oder das Präcompound aus Schritt 1 mit den Komponenten A, B, D und optional E gemischt und anschließend schmelzcompoundiert und schmelzextrudiert.

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern sowie von Komponente D verschiedenen Farbstoffen und Pigmenten.

### Herstellung der Formmassen und Formkörper

Die erfindungsgemäßen thermoplastischen Formmassen können beispielsweise hergestellt werden, indem man die jeweiligen Bestandteile in bekannter Weise vermischt und bei Temperaturen von bevorzugt 200°C bis 320°C, besonders bevorzugt bei 240 bis 300°C in üblichen Aggregaten wie beispielsweise Innenknetem, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist auch ein Verfahren zur Herstellung der erfindungsgemäßen Zusammensetzungen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Insbesondere eignen sich die erfindungsgemäßen Formmassen zur Herstellung von dauerhaft antistatischen Formteilen mit geringer Neigung zur Staubanziehung, besonders bevorzugt für unbeschichtete dekorative Bauteile im Automobilinnenraum.

Die vorliegende Erfindung betrifft auch die Verwendung der vorgestellten und beanspruchten Zusammensetzungen zur Herstellung von Formkörpern, sowie eben diese Formkörper, die eine dieser Zusammensetzungen enthalten.

### Beispiele

### Komponente A:

Lineares Polycarbonat auf Basis Bisphenol-A mit einem gewichtsgemittelten Molekulargewicht MW von 30.000 g/mol (bestimmt durch GPC in Methlylenchlorid gegen einen BPA-PC-Standard).

### Komponente B:

Acrylnitril-Butadien-Styrol (ABS)-Polymer, hergestellt im Masse-Polymerisationsverfahren, welches eine disperse Phase aus Polybutadien-haltigen Kautschukpartikeln mit Inklusionen aus Styrol-Acrylnitril-Copolymerisat und eine Styrol-Acrylnitril-Copolymerisat-Matrix enthält, ein A:B:S-Verhältnis von 23:10:67 Gew.-% und einen Gelgehalt, bestimmt als in Aceton unlöslicher Anteil, von 20 Gew.-% aufweist. Das freie, das heißt in Aceton lösliche Styrol-Acrylnitril-Copolymer in Komponente B1 weist ein gewichtsgemitteltes Molekulargewicht M_{w} (gemessen per GPC in Aceton als Lösungsmittel mit Polystyrol als Standard) von 165 kg/mol auf. Die mittlere Kautschukpartikelgröße D50, gemessen per Ultrazentrifugation, beträgt 0,85 µm. Die Schmelzeflussrate (MVR) der Komponente B1, gemessen nach ISO 1133 (Version von 2012) bei 220°C mit einer Stempellast von 10 kg, beträgt 6,7 ml/10 min.

### Komponente C:

Polyetheramid-Blockcopolymer (PEBA) bestehend zu 50 Gew.-%, bezogen auf das PEBA, an Polyethylenglykolblöcken und zu 50 Gew.-%, bezogen auf das PEBA, an Polyamid-12-Blöcken. Der spezifische elektrische Oberflächenwiderstand beträgt 3·10⁹ Ω, gemessen nach IEC 60093 (in der Version von 1993).

### Komponente D1:

Kronos™ 2233 (Kronos Titan GmbH, Leverkusen, Deutschland):
Titandioxid-Pigment mit Rutil-Struktur, hergestellt im Chlorid-Verfahren, mit einer Oberflächenbeschichtung aus Aluminium- und Polysiloxan-Verbindungen. Der Titandioxid-Gehalt, ermittelt nach DIN EN ISO 591, beträgt ≥96 Gew.-%, die Dichte, ermittelt nach DIN EN ISO 787-10, beträgt 4,2 g/cm3 und die Ölabsorption, ermittelt nach DIN EN ISO 787-5 beträgt 14,5 g/100 g Pigment.

### Komponente D2:

Eisenoxid-Pigment: Bayferrox™ 180M (Lanxess AG, Köln, Deutschland)

### Komponente D3:

Industrieruß: Black pearls™ 800 (Cabot Corporation)

### Komponente E1:

Pentaerythrittetrastearat

### Komponente E2:

Irgafos™ 168 (BASF; Ludwigshafen, Deutschland):
Tris(2,4-di-tert.-butyl-phenyl)-phosphit

### Komponente E3:

Irganox™ 1076 (BASF; Ludwigshafen, Deutschland):
2,6-Di-tert.-butyl-4-(octadecanoxycarbonylethyl)phenol

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 260°C und unter Anlegen eines Unterdrucks von 50 mbar (absolut). Die Formkörper wurden mit Ausnahme der Prüfkörper für den Durchstoßversuch bei 260°C Massetemperatur und einer Werkzeugtemperatur von 80°C auf einer Spritzgießmaschine Typ Arburg 270 E hergestellt. Die Prüfkörper für den Durchstoßversuch wurden bei 300°C Massetemperatur bei ansonsten denselben Verarbeitungsparametern hergestellt.

Die Kerbschlagzähigkeit nach IZOD wurde bestimmt bei -30°C gemäß ISO 180-1A (Version von 1982) an jeweils zehn Prüfkörpern der Abmessung 80 mm x 10 mm x 4mm. Als zähes Bruchverhalten wurden Kerbschlagzähigkeitseinzelwerte >30 kJ/m² gewertet.

Der Vicat B/120 als Maß für die Wärmeformbeständigkeit wurde bestimmt gemäß ISO 306 (Version von 2013) an Prüfkörpern der Abmessung 80 mm x 10 mm x 4mm mit einer Stempellast von 50 N und einer Aufheizgeschwindigkeit von 120°C/h.

Als Maß für die Tieftemperaturduktilität im praxisrelevanten Schlag-/Crashversuch diente das Verhalten im multiaxialen Durchstoßversuch. Der Durchstoßversuch wurde bei -30°C gemäß ISO 6603-2 (Version von 2000) an Prüfkörpern der Abmessung 60 mm x 60 mm x 2 mm durchgeführt. Diese wurden bei einer erhöhten Massetemperatur von 300°C gefertigt, um besonders kritische Verarbeitungsbedingungen zu simulieren. Die Prüfkörper wurden hinsichtlich den in ISO 6603-2 aufgeführten Schädigungsarten YD, YS, YU und NY ausgewertet. Es wurden die Bruchbilder von insgesamt zehn Prüfkörpern dahingehend beurteilt, ob ein zähes (nicht splitterndes) oder sprödes (splitterndes) Bruchbild auftritt. Dabei wurden als zähes (nicht splitterndes) Bruchbild die Schädigungsarten YD, YS und YU, als sprödes (splitterndes) Bruchbild die Schädigungsart NY gemäß ISO 6603-2 definiert.
Zusätzlich wurde für eine verfeinerte Differenzierung der Materialduktilität ausgewertet, welcher Anteil der Prüfkörper Bewertungen von YD und YS erhalten haben, d.h. bei wie vielen Prüfkörpern keine Rissbildung oder eine zumindest stabile Rissbildung auftrat.

Der spezifische Oberflächenwiderstand wurde nach IEC 60093 (Version von 1993) an Rundplatten mit 60 mm Durchmesser und einer Dicke von 2 mm bestimmt.

**Tabelle 1: Zusammensetzungen und ihre Eigenschaften**

| **Komponenten [Gew.- Teile]** | **V1** | **V2** | **V3** | **4** | **5** | **6** | **7** | **8** | **V9** | **V10** |
|---|---|---|---|---|---|---|---|---|---|---|
| A | 70 | 70 | 70 | 70 | 70 | 70 | 70 | 70 | 70 | 70 |
| B | 23 | 23 | 23 | 23 | 23 | 23 | 23 | 23 | 23 | 23 |
| C | 7 | 7 | 7 | 7 | 7 | 7 | 7 | 7 | 7 | 7 |
| D1 | | 0,10 | 0,50 | 2,00 | 4,00 | 4,77 | 6,00 | 10,00 | | |
| D2 | | | | | | | | | 4,00 | |
| D3 | | | | | | | | | | 4,00 |
| E1 | 0,75 | 0,75 | 0,75 | 0,75 | 0,75 | 0,75 | 0,75 | 0,75 | 0,75 | 0,75 |
| E2 | 0,08 | 0,08 | 0,08 | 0,08 | 0,08 | 0,08 | 0,08 | 0,08 | 0,08 | 0,08 |
| E3 | 0,22 | 0,22 | 0,22 | 0,22 | 0,22 | 0,22 | 0,22 | 0,22 | 0,22 | 0,22 |

| **Eigenschaften** | | | | | | | | | | |
|---|---|---|---|---|---|---|---|---|---|---|
| 2 Kerbschlagzähigkeit (-30°C) [kJ/m²] | 4 | 21 | 50 | 68 | 76 | 55 | 68 | 67 | 52 | 10 |
| Zäh-Spröd Übergangstemperatur im IZOD- Kerbschlagversuch [°C] | >23°C | | | | | -35 | | | | |
| % duktiles Bruchverhalten im Durchstoßversuch (-30°C) | 0 | 0 | 0 | 100 | 100 | 100 | 100 | 100 | 10 | 0 |
| % keine oder stabile Rissbildung im Durchstoßversuch (-30°C) | 0 | 0 | 0 | 100 | 80 | 70 | 40 | 0 | 0 | 0 |
| Vicat B/120 [°C] | 111 | 120 | 127 | 128 | 128 | 128 | 127 | 128 | 128 | 130 |
| Oberflächenwiderstand [Ω] | 3·10¹⁵ | 2·10¹⁴ | 1·10¹⁴ | 9·10¹² | 8·10¹² | 7·10¹² | 8·10¹² | 8·10¹² | 4·10¹³ | 1·10¹⁴ |

Die Daten in Tabelle 1 zeigen, dass die erfindungsgemäßen Beispiele 2-8 enthaltend einen Titandioxidanteil wie beansprucht eine bessere Tieftemperaturzähigkeit, elektrische Ableitfähigkeit (geringeren spezifischen elektrischen Oberflächenwiderstand) und auch eine höhere Wärmeformbeständigkeit aufweisen als die entsprechenden Zusammensetzungen ohne Titandioxid oder mit einem Titandioxidanteil außerhalb des beanspruchten Bereichs. Dies ist insofern überraschend, da es der allgemeinen fachmännischen Erfahrung entspricht, dass die Materialzähigkeit von PC+ABS-Blends durch den Zusatz anorganischer Pigmente insbesondere bei tiefen Temperaturen unter der Wirkung der Pigmente als Fehlstellen sowie aufgrund des durch die Pigmente induzierten Molekulargewichtsabbau im Polycarbonat unter den thermischen Bedingungen bei der Compoundierung und im Spritzguss eher leidet als davon profitiert. Die Beispiele zeigen auch, dass mit anderen Pigmenten wie Ruß oder Eisenoxid die gewünschten Verbesserungen nicht erreicht werden,

## Patentansprüche

1. Zusammensetzungen enthaltend
A) 50 bis 90 Gew.-% mindestens eines Polymers ausgewählt aus der Gruppe bestehend aus aromatischem Polycarbonat, aromatischem Polyestercarbonat und aromatischem Polyester,
B) 5 bis 40 Gew.-% kautschukbasiertes Pfropfpolymerisat oder einer Mischung aus kautschukbasiertem Pfropfpolymerisat und kautschukfreiem Vinyl(co)polymerisat,
C) 3 bis 25 Gew.-% mindestens eines Polyether-basierten Copolymers ausgewählt aus der Gruppe bestehend aus Polyether-Block-Polymeren und Polyether-basierten Polyurethanen,
D) 0,8 bis 9 Gew.-% mindestens eines Pigments auf Basis von Titandioxid,
E) 0 bis 20 Gew.-% eines oder mehrerer weiterer Additive.

2. Zusammensetzungen gemäß Anspruch 1, wobei Komponente A aromatisches Polycarbonat ist.

3. Zusammensetzungen gemäß einem der vorherigen Ansprüche, wobei die Komponenten C und D in einem Gewichtsverhältnis C/D von 1,1 bis 4 eingesetzt werden.

4. Zusammensetzungen gemäß einem der vorherigen Ansprüche, wobei Komponente C ein Blockcopolymer enhaltend Polyethylenglykol- und Polyamid-Blöcke ist.

5. Zusammensetzungen gemäß einem der vorherigen Ansprüche, wobei die Komponente D zu mindestens 95 Gew.-% aus Titandioxid in der Rutil-Modifikation besteht.

6. Zusammensetzung gemäß einem der vorhergehenden Ansprüche, enthaltend als Komponente E mindestens ein Additiv ausgewählt aus der Gruppe bestehend aus Gleit- und Entformungsmitteln, Stabilisatoren, Fließfähigkeitspromotoren, Verträglichkeitsvermittlern sowie von Komponente D verschiedenen Farbstoffen und Pigmenten.

7. Zusammensetzungen gemäß einem der vorherigen Ansprüche bestehend aus den Komponenten A) bis E).

8. Verwendung von Zusammensetzungen gemäß einem der Ansprüche 1 bis 7 zur Herstellung von Formkörpern.

9. Formkörper erhältlich aus Zusammensetzungen gemäß einem der Ansprüche 1-7.

10. Verwendung von Pigmenten auf Basis von Titandioxid zur Verbesserung der Zähigkeit und der elektrischen Oberflächenleitfähigkeit von mit Polyether-basierten Polymeren ausgerüsteten Zusammensetzungen enthaltend mindestens ein Polymer ausgewählt aus der Gruppe bestehend aus aromatischem Polycarbonat, aromatischem Polyestercarbonat und aromatischem Polyester.

11. Verwendung gemäß Anspruch 10, wobei die Zusammensetzungen 50 bis 90 Gew.-% mindestens eines Vertreters ausgewählt aus der Gruppe bestehend aus aromatischem Polycarbonat, aromatischem Polyestercarbonat und aromatischem Polyester,
5 bis 40 Gew.-% kautschukbasiertes Pfropfpolymerisat oder eine Mischung aus kautschukbasiertem Pfropfpolymerisat und kautschukfreiem Vinyl(co)polymerisat
3 bis 25 Gew.-% mindestens eines Polyether-basierten Copolymers ausgewählt aus der Gruppe bestehend aus Polyether-Block-Polymeren und Polyether-basierten Polyurethanen,
0 bis 20 Gew.-% eines oder mehrerer weiterer Additive enthalten.

12. Verwendung gemäß Anspruch 11, wobei als Polyether-basiertes Polymer ein Blockcopolymer enhaltend Polyethylenglykol- und Polyamid-Blöcke zum Einsatz kommt.

13. Verwendung gemäß einem der Ansprüche 10 bis 12, wobei das Pigment auf Basis von Titandioxid in einem Anteil von 0,8 bis 9 Gew.-% bezogen auf die Zusammensetzung eingesetzt wird.

14. Verwendung gemäß einem der Ansprüche 10 bis 12, wobei das Pigment auf Basis von Titandioxid in einem Anteil von 3 bis 7 Gew.-% bezogen auf die Zusammensetzung eingesetzt wird.

15. Verwendung gemäß einem der Ansprüche 10 bis 14, wobei das Pigment zu mindestens 95 Gew.-% aus Titandioxid in der Rutil-Modifikation besteht.

## Claims

1. Compositions comprising
A) 50 to 90% by weight of at least one polymer selected from the group consisting of aromatic polycarbonate, aromatic polyestercarbonate and aromatic polyester,
B) 5 to 40% by weight of rubber-based graft polymer or a mixture of rubber-based graft polymer and rubber-free vinyl (co)polymer,
C) 3 to 25% by weight of at least one polyether-based copolymer selected from the group consisting of polyether block polymers and polyether-based polyurethanes,
D) 0.8 to 9% by weight of at least one pigment based on titanium dioxide,
E) 0 to 20% by weight of one or more further additives.

2. Compositions according to Claim 1, wherein component A is aromatic polycarbonate.

3. Compositions according to either of the preceding claims, wherein components C and D are employed in a weight ratio C/D of 1.1 to 4.

4. Compositions according to any of the preceding claims, wherein component C is a block copolymer comprising polyethylene glycol and polyamide blocks.

5. Compositions according to any of the preceding claims, wherein component D consists to an extent of at least 95% by weight of titanium dioxide in the rutile modification.

6. Composition according to any of the preceding claims, comprising as component E at least one additive selected from the group consisting of lubricants and demoulding agents, stabilizers, flow promoters, compatibilizers and dyes and pigments distinct from component D.

7. Compositions according to any of the preceding claims consisting of components A) to E).

8. Use of compositions according to any of Claims 1 to 7 for the production of moulded articles.

9. Moulded articles obtainable from compositions according to any of Claims 1-7.

10. Use of pigments based on titanium dioxide for improving toughness and electrical surface conductivity of compositions endowed with polyether-based polymers and comprising at least one polymer selected from the group consisting of aromatic polycarbonate, aromatic polyestercarbonate and aromatic polyester.

11. Use according to Claim 10, wherein the compositions comprise
50 to 90% by weight of at least one representative selected from the group consisting of aromatic polycarbonate, aromatic polyestercarbonate and aromatic polyester,
5 to 40% by weight of rubber-based graft polymer or a mixture of rubber-based graft polymer and rubber-free vinyl (co)polymer,
3 to 25% by weight of at least one polyether-based copolymer selected from the group consisting of polyether block polymers and polyether-based polyurethanes,
0 to 20% by weight of one or more further additives.

12. Use according to Claim 11, wherein the polyether-based polymer used is a block copolymer comprising polyethylene glycol and polyamide blocks.

13. Use according to any of Claims 10 to 12, wherein the pigment based on titanium dioxide is employed in a proportion of 0.8 to 9% by weight based on the composition.

14. Use according to any of Claims 10 to 12, wherein the pigment based on titanium dioxide is employed in a proportion of 3 to 7% by weight based on the composition.

15. Use according to any of Claims 10 to 14, wherein the pigment consists to an extent of at least 95% by weight of titanium dioxide in the rutile modification.

## Revendications

1. Compositions contenant
A) 50 à 90 % en poids d'au moins un polymère choisi dans le groupe constitué par un polycarbonate aromatique, un polyester-carbonate aromatique et un polyester aromatique,
B) 5 à 40 % en poids d'un polymère greffé à base de caoutchouc ou d'un mélange d'un polymère greffé à base de caoutchouc et d'un (co)polymère de vinyle exempt de caoutchouc,
C) 3 à 25 % en poids d'au moins un copolymère à base de polyéther choisi dans le groupe constitué par les polymères séquencés de polyéther et les polyuréthanes à base de polyéther,
D) 0,8 à 9 % en poids d'au moins un pigment à base de dioxyde de titane,
E) 0 à 20 % en poids d'un ou de plusieurs additifs supplémentaires.

2. Compositions selon la revendication 1, dans lesquelles le composant A est un polycarbonate aromatique.

3. Compositions selon l'une quelconque des revendications précédentes, dans lesquelles les composants C et D sont utilisés en un rapport en poids C/D de 1,1 à 4.

4. Compositions selon l'une quelconque des revendications précédentes, dans lesquelles le composant C est un copolymère séquencé contenant des séquences polyéthylène glycol et polyamide.

5. Compositions selon l'une quelconque des revendications précédentes, dans lesquelles le composant D est constitué à hauteur d'au moins 95 % en poids par du dioxyde de titane sous la forme rutile.

6. Compositions selon l'une quelconque des revendications précédentes, contenant en tant que composant E au moins un additif choisi dans le groupe constitué par les agents lubrifiants et de démoulage, les stabilisateurs, les promoteurs de fluidité, les compatibilisateurs, ainsi que les colorants et les pigments différents du composant D.

7. Compositions selon l'une quelconque des revendications précédentes, constituée par les composants A) à E).

8. Utilisation de compositions selon l'une quelconque des revendications 1 à 7 pour la fabrication de corps moulés.

9. Corps moulés pouvant être obtenus à partir de compositions selon l'une quelconque des revendications 1 à 7.

10. Utilisation de pigments à base de dioxyde de titane pour améliorer la résistance et la conductivité de surface électrique de compositions munies de polymères à base de polyéther contenant au moins un polymère choisi dans le groupe constitué par un polycarbonate aromatique, un polyester-carbonate aromatique et un polyester aromatique.

11. Utilisation selon la revendication 10, dans laquelle les compositions contiennent :
50 à 90 % en poids d'au moins un élément choisi dans le groupe constitué par un polycarbonate aromatique, un polyester-carbonate aromatique et un polyester aromatique,
5 à 40 % en poids d'un polymère greffé à base de caoutchouc ou d'un mélange d'un polymère greffé à base de caoutchouc et d'un (co)polymère de vinyle exempt de caoutchouc,
3 à 25 % en poids d'au moins un copolymère à base de polyéther choisi dans le groupe constitué par les polymères séquencés de polyéther et les polyuréthanes à base de polyéther,
0 à 20 % en poids d'un ou de plusieurs additifs supplémentaires.

12. Utilisation selon la revendication 11, dans laquelle un copolymère séquencé contenant des séquences polyéthylène glycol et polyamide est utilisé en tant que polymère à base de polyéther.

13. Utilisation selon l'une quelconque des revendications 10 à 12, dans laquelle le pigment à base de dioxyde de titane est utilisé en une proportion de 0,8 à 9 % en poids, par rapport à la composition.

14. Utilisation selon l'une quelconque des revendications 10 à 12, dans laquelle le pigment à base de dioxyde de titane est utilisé en une proportion de 3 à 7 % en poids, par rapport à la composition.

15. Utilisation selon l'une quelconque des revendications 10 à 14, dans laquelle le pigment est constitué à hauteur d'au moins 95 % en poids par du dioxyde de titane sous la forme rutile.
